(19) Europäisches Patentamt
European Patent Office
Office européen des brevets

(11) **EP 2 368 316 B1**

(12) **EUROPEAN PATENT SPECIFICATION**

(45) Date of publication and mention
of the grant of the patent:
**25.11.2020 Bulletin 2020/48**

(51) Int Cl.:
*H02M 7/483* $^{(2007.01)}$    *H02M 3/335* $^{(2006.01)}$

(21) Application number: **08875502.0**

(86) International application number:
**PCT/EP2008/068058**

(22) Date of filing: **19.12.2008**

(87) International publication number:
**WO 2010/069401 (24.06.2010 Gazette 2010/25)**

(54) **CURRENT SOURCE ELEMENT**

STROMQUELLENELEMENT

ELÉMENT DE SOURCE DE COURANT

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**28.09.2011 Bulletin 2011/39**

(73) Proprietor: **General Electric Technology GmbH
5400 Baden (CH)**

(72) Inventor: **OATES, Colin Donald Murray
Staffordshire ST17-0TL (GB)**

(74) Representative: **Brevalex
95, rue d'Amsterdam
75378 Paris Cedex 8 (FR)**

(56) References cited:
EP-A- 1 928 078          WO-A-2006/124868
WO-A1-2008/067784    DE-A1- 10 217 889
US-A- 5 642 275          US-A1- 2004 022 081

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to a current source element for use in a current source converter, and a current source converter incorporating one or more current source elements.

The nature of power electronics is to employ switches based on semiconductor technology that direct current.

When combined with passive components that provide temporary energy storage, the ability of these switches to operate rapidly permits electrical power in practically any form to be converted to a different form with minimal losses.

The emphasis on making such power conversion efficient and compact has focused development on increasing the frequency of operation so that the size of the passive components can be reduced.

For power conversion equipment involving high voltages, high frequency switching is not desirable since it creates high stressing on insulation, and series semiconductor switches must be configured to operate within the operating parameters of the poorest of the switches. The converter losses therefore become exaggerated.

The path of the circulating current passing through each switch must also have a large area to maintain the insulation, thereby creating a large self-inductance that will inherently limit the converter performance.

A number of multilevel topologies exist that allow the semiconductor switches to operate independently. GB 2 294 821 A discloses a static compensator (STATCOM) circuit, which is a chainlink converter consisting of a series of modules that each include charged capacitance that can be switched in and out of circuit using semiconductor switches to yield a continuously variable voltage source. The circulating current path for the semiconductor switching is contained within the respective modules, which results in minimum self-inductance and thereby improves the efficiency of the switching operation.

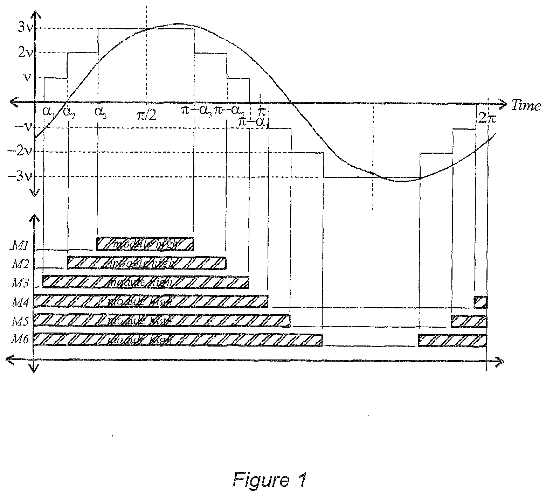

Figure 1 shows a 50Hz power waveform being synthesized by staggering the switching of the modules such that, although many switching operations are taking place, the switching operations are contained within individual modules and the number of switching operations per module may be as low as the frequency of the power voltage.

The concept underlying the chainlink topology disclosed in GB 2 294 821 A originates from work that was carried out at the Massachusetts Institute of Technology (MIT) in the 1970s to produce a high voltage converter from linked circuits, each circuit containing a moderate voltage source that could be switched in or out of circuit.

This work was embodied in US 3,909,685, US 3,866,643 and US 3,971,976, which disclose circuits in which the voltage source is initially a battery, and later the transformer isolated output of a high frequency converter, and a switch is included so that the batteries can be connected in parallel for charging.

These patents disclose the basic concept of the multilevel converter principle, demonstrate how a sinusoidal voltage can be synthesized from a stepped waveform and formed the inspiration for the STATCOM circuit of GB 2 294 821 A.

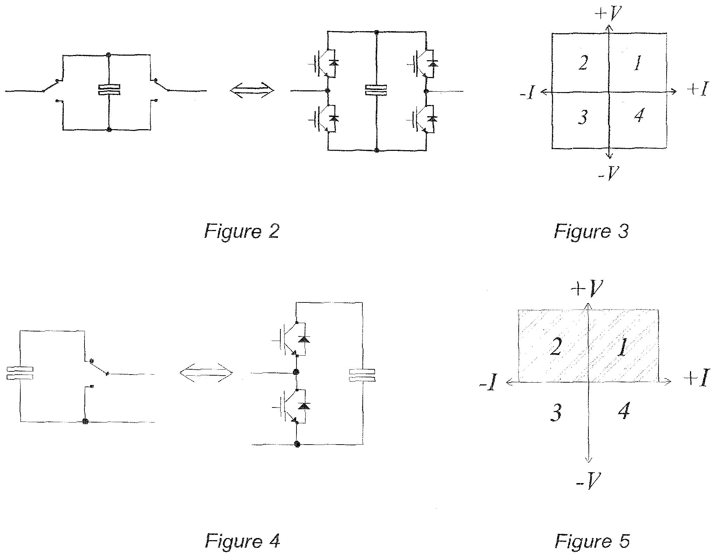

In the circuit of GB 2 294 821 A the voltage source is replaced by a charged capacitor within a 4-quadrant module, which is shown in Figure 2.

The term "4-quadrant" refers to the ability of the module to conduct current in both directions and develop both positive and negative voltage. This is exemplified in the graph of voltage against current shown in Figure 3 in which the numbers shown indicate the respective quadrants.

The ability to develop positive and negative voltage and to conduct current in both directions allows a string of such modules to be operated against an AC power network to provide only reactive power.

In the circuit of GB 2 294 821 A there is no net power flow between the power network and the STATCOM circuit except to counter losses. This means that once the capacitors are charged they remain charged.

DE 101 03 031 A1 recognises that power can be transferred from an AC circuit to a DC circuit using the 2-quadrant capacitor module shown in Figure 4.

The significance of the "2-quadrant" operation is that the module can only develop zero or positive voltage but can conduct current in both directions. This is exemplified in the graph of voltage against current shown in Figure 5 in which the numbers shown indicate the respective quadrants.

The principle of the circuit disclosed in DE 101 03 031 A1 has been embodied within topologies disclosed in WO 2007/028349 A1 and WO 2007/0328350 A1 for voltage source converter (VSC) type high voltage direct current (HVDC) schemes.

GB 2 294 821 A, DE 101 03 031 A1, WO 2007/028349 A1 and WO 2007/0328350 A1 however consider the chainlink converter as a series of power electronics modules that can be controlled to give a continuously variable voltage source. An aim of the invention is to extend these principles to one that can be applied to a range of topologies and that will give rise to converters suitable for power conversion at high voltages.

WO 2008/067784 A1 discloses a device for converting an electrical current, having AC connections and DC connections. A phase module branch is provided between each DC connection and each AC connection. Each phase module branch has a series connection made of sub-modules, which each comprise an energy accumulator each and power semiconductors. The device further comprises measuring sensors for providing actual values and control means connected to the measuring sensors. The control means comprise a current regulating unit and control units each associated with a phase module branch, wherein the current regulating unit is configured to provide branch target values for the control units.

US 2004/022081 A1 discloses a system for capturing electrical energy from a variable-speed generator. The system includes a matrix converter using full-bridge, multilevel switch cells, in which semiconductor devices are clamped to a known constant DC voltage of a capacitor. The multilevel matrix converter is capable of generating multilevel voltage wave waveform of arbitrary magnitude and frequencies. The matrix converter can be controlled by using space vector modulation.

Document DE10217889A1 discloses AC/AC matrix converters using cascaded H-bridge arms.

The invention is defined by the independent claim.

Preferred embodiments are described by the dependent claims.

Embodiments of the invention will now be described, by way of non-limiting examples, with reference to the accompanying figures in which:

Figure 1 shows the synthesis of a 50Hz power waveform by staggering the switching of a series of modules in a chainlink converter;

Figure 2 shows a 4-quadrant module;

Figure 3 shows a graph of voltage against current for the 4-quadrant module of Figure 2;

Figure 4 shows a 2-quadrant module;

Figure 5 shows a graph of voltage against current for the 2-quadrant module of Figure 4;

Figure 6 shows a current source element according to an embodiment of the invention;

Figure 7 shows a current source element according to another embodiment of the invention;

Figure 8 shows a schematic circuit arrangement of a three-phase to three-phase converter according to another embodiment of the invention;

Figure 9 shows a detailed circuit topology of the three-phase to three-phase converter of Figure 8;

Figures 10a and 10b demonstrate the AC voltages and currents when the three-phase to three-phase converter of Figure 8 is used to interconnect a 50Hz network and a 25Hz network;

Figures 11 and 12 show the operation of two of the current source elements of the three-phase to three-phase converter of Figure 8;

Figure 13 shows a detailed circuit topology of a three-phase to single-phase converter according to another embodiment of the invention;

Figure 14 shows a detailed circuit topology of a three-phase to symmetrical $\pm$DC converter according to an example not falling in the scope of the claims;

Figure 15 shows a schematic circuit arrangement of a DC to symmetrical single phase AC converter according to an example not falling in the scope of the claims;

Figure 16 shows a detailed circuit topology of the DC to symmetrical single phase AC converter of Figure 15;

Figure 17 demonstrates the top constant current element voltages and currents of a simulation of the DC to symmetrical single phase AC converter of Figure 15;

Figure 18 demonstrates the capacitor voltages of the simulation of the DC to symmetrical single phase AC converter of Figure 15;

Figure 19 demonstrates the separated DC and AC currents when the AC voltage and the AC current reference of the simulation are both reversed in polarity;

Figure 20 shows a schematic circuit arrangement of a galvanically isolated DC to DC converter according an example not falling in the scope of the claims; and

Figure 21 shows a detailed circuit topology of the galvanically isolated DC to DC converter of Figure 20.

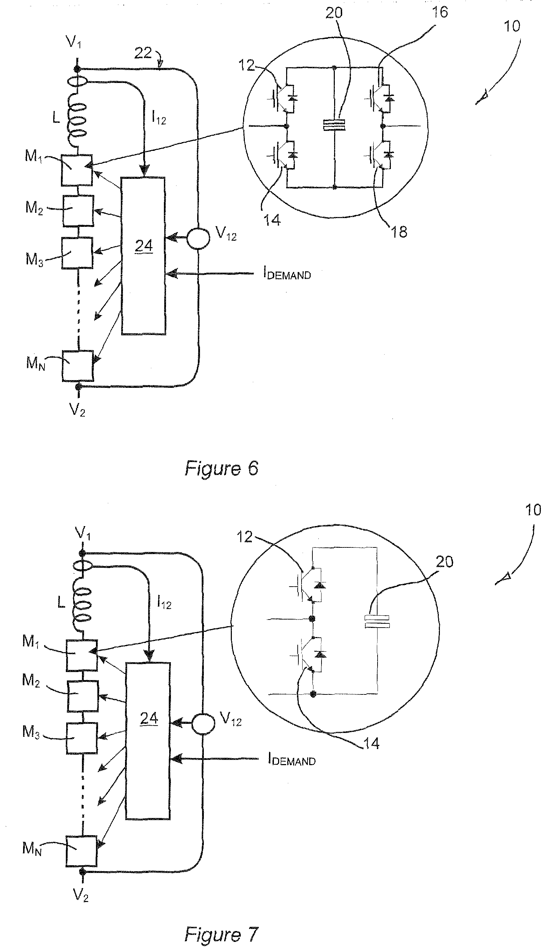

A current source element 10 according to an embodiment of the invention is shown in Figure 6. The current source element 10 includes first and second voltage terminals $V_1,V_2$ and a chain of modules $M_1,M_2,M_3....M_N$ and an inductor L connected in series between the voltage terminals.

In the embodiment shown in Figure 6, each of the modules $M_1, M_2, M_3....M_N$ includes two pairs of semiconductor switches 12,14,16,18 in the form of insulated gate bipolar transistors connected in a full-bridge arrangement with a capacitor 20 to define a 4-quadrant bipolar module.

In another embodiment, which is shown in Figure 7, each of the modules $M_1,M_2,M_3....M_N$ includes a pair of semiconductor switches 12,14 in the form of insulated gate bipolar transistors connected in a half-bridge arrangement with a capacitor 20 to define a 2-quadrant unipolar module.

The current source element 10 shown in each of Figures 6 and 7 includes a control circuit 22 connected across the first and second voltage terminals $V_1,V_2$. The control circuit 22 measures the voltage across the first and second voltage terminals $V_1,V_2$ to determine the potential difference $V_{12}$ across the two terminals $V_1,V_2$ and measures the current $I_{12}$ through the inductor L.

The current source element 10 also includes a control element 24 operably associated with the modules $M_1$, $M_2$, $M_3$....$M_N$ to control operation of the semiconductor switches in response to the measured voltage and current values $V_{12}$, $I_{12}$ received from the control circuit 22 in order to regulate the current through the inductor L in accordance with a received control signal $I_{DEMAND}$.

In use, to form a converter, one of more current source elements 10 are connected between an input circuit and an output circuit in order to facilitate a net power transfer between the input and output circuits.

In the simplest form of converter, the input circuit is connected to the first voltage terminal $V_1$ of a current source element 10 and an output circuit is connected to the second voltage terminal $V_2$ of the current source element 10.

The use of 2-quadrant unipolar modules $M_1, M_2, M_3$....$M_N$ or 4-quadrant bipolar modules $M_1, M_2, M_3$....$M_N$ is dependent on whether the polarity of the voltages reverses between the input and output circuits.

The current source element 10 is connected between the input and output circuits such that input and output currents can circulate only within the context of the input and output circuits and a circulating path for all the currents is provided permitting interaction for an exchange of power between the input and output circuits.

A controller is provided that calculates the current profile required from the current source element 10 according to the nature of the input and output circuits. The controller communicates with the control element 24 of the current source element 10, providing the control signal $I_{DEMAND}$ required to allow the control element 24 to control the current through the inductor L.

The control element 24 controls the current through the inductor L by controlling switching of the semiconductor switches of the modules $M_1, M_2, M_3$....$M_N$ in order to switch modules into and out of the chain of modules to maintain the sum of the voltages over the chain of modules $M_1, M_2, M_3$....$M_N$ and the inductor equal to the difference $V_{12}$ between the voltages at the first and second voltage terminals $V_1, V_2$ whilst varying the voltages over the individual modules $M_1, M_2, M_3$....$M_N$ so as to vary the voltage e over the inductor L and thereby control the rate of change of current in the inductor L in accordance with the following equation:

$$e = L \cdot \frac{di}{dt}$$

where $L$ is the inductance value of the inductor L so that:

$$V_{CLM} = V_{12} - L \cdot \frac{i_D - i_0}{\Delta t}$$

where $V_{CLM}$ is the voltage required from the chain of modules, $i_o$ is the measured current and $i_D$ is the current required at the end of the sample period $\Delta t$.

This allows the current in the input and output circuits to be controlled by regulating the current source element to follow the instantaneous current difference between the current passing through the current source element for the input and output circuit.

The inductance L of the inductor L, the capacitance of the capacitor 20 of each module $M_1, M_2, M_3$....$M_N$ and the sample period $\Delta t$ must be chosen to suit the application.

Each of the modules $M_1, M_2, M_3$....$M_N$ provides its voltage from the capacitor 20 and the switching of the semiconductor switches is controlled to ensure that the charge of the capacitor 20 of each of the modules $M_1, M_2, M_3$....$M_N$ is maintained within predetermined limits.

The transient energy storage provided by the capacitor 20 of each of the modules $M_1, M_2, M_3$....$M_N$ allows for a net power transfer between the input and output circuits whilst maintaining the input and output circuits independent of each other.

The power transfer is effected by means of a difference current through the current source module, which must reverse in polarity sufficiently to reset the charge on each capacitor 20.

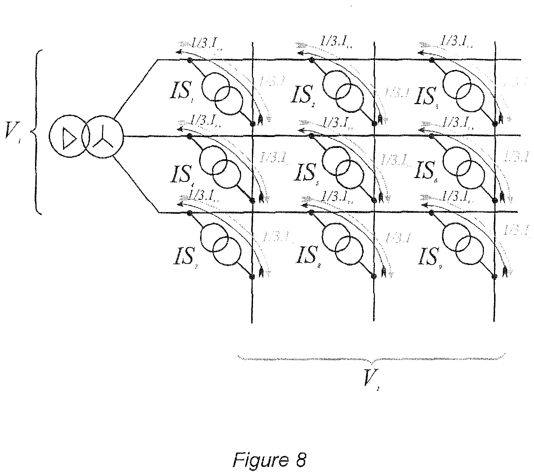

In preferred embodiments of the invention, a matrix array of current source elements 10 is constructed and one such embodiment is shown in schematic form in Figure 8 in which nine current source elements 10 are connected in a 3x3 matrix array 30 in order to interconnect two three-phase networks.

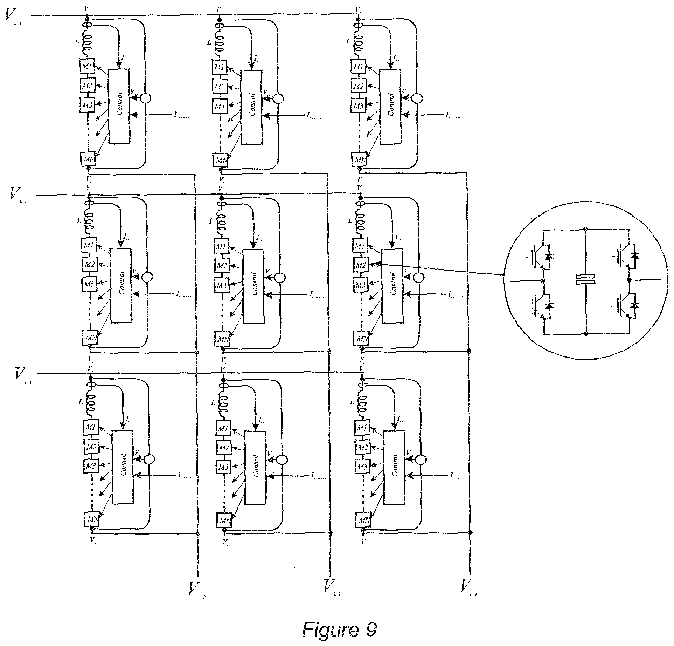

This arrangement, a detailed circuit topology of which is shown in Figure 9, requires only one converter when compared with a conventional method of connecting two HVDC systems back to back with a coupling DC link. Consequently there is only one set of losses. There are also fewer components making the converter smaller and cheaper to construct.

Practical uses of the topology shown in Figure 9 include static frequency changing, such as the frequency change from 50Hz to 400Hz that is required in aerospace and shipboard applications.

Referring to Figure 8, each phase connection of the matrix array 30 contributes one third of the current requirement of the phase to which it is connected.

Assuming that the input and output circuits are balanced, any transient difference between the two sets of waveforms is provided by the energy in the capacitors 20 of the modules $M_1,M_2,M_3....M_N$ of the current source elements 10.

If the two three-phase networks are balanced an in phase with their respective voltages so that only power is being transferred and the voltages have peak magnitudes $V_1$ and $V_2$, then from the power balance:

$$P = \frac{3}{2} \cdot V_1 \cdot I_1 = \frac{3}{2} \cdot V_2 \cdot I_2$$

and the currents $I_1,I_2$ in the input and output circuits will have the following magnitudes:

$$I_1 = \frac{2 \cdot P}{3 \cdot |V_1|} = I_2 \cdot \frac{|V_2|}{|V_1|}$$

Since each phase connection of the matrix array 30 contributes one third of the current requirement of the phase to which it is connected, and noting that there is a reversal in the polarity of the current to give a power balance, the matrix of the current demand is:

$$IS = \frac{1}{3} \cdot \begin{bmatrix} (i_{a1} + i_{a2}) & (i_{a1} + i_{b2}) & (i_{a1} + i_{c2}) \\ (i_{b1} + i_{a2}) & (i_{b1} + i_{b2}) & (i_{b1} + i_{c2}) \\ (i_{c1} + i_{a2}) & (i_{c1} + i_{b2}) & (i_{c1} + i_{c2}) \end{bmatrix}$$

where

$$\begin{bmatrix} i_{a1} \\ i_{b1} \\ i_{c1} \end{bmatrix} = I_1 \cdot \begin{bmatrix} \sin(\omega \cdot t) \\ \sin(\omega \cdot t - 2\pi/3) \\ \sin(\omega \cdot t + 2\pi/3) \end{bmatrix} \quad \text{and} \quad \begin{bmatrix} i_{a2} \\ i_{b2} \\ i_{c2} \end{bmatrix} = I_2 \cdot \begin{bmatrix} \sin(\omega \cdot t) \\ \sin(\omega \cdot t - 2\pi/3) \\ \sin(\omega \cdot t + 2\pi/3 \end{bmatrix}.$$

Similarly the voltage across the elements is:

$$V_{IS} = \begin{bmatrix} (v_{a1} - v_{a2}) & (v_{a1} - v_{b2}) & (v_{a1} - v_{c2}) \\ (v_{b1} - v_{a2}) & (v_{b1} - v_{b2}) & (v_{b1} - v_{c2}) \\ (v_{c1} - v_{a2}) & (v_{c1} - v_{b2}) & (v_{c1} - v_{c2}) \end{bmatrix}$$

where

$$\begin{bmatrix} v_{a1} \\ v_{b1} \\ v_{c1} \end{bmatrix} = V_1 \cdot \begin{bmatrix} \sin(\omega \cdot t) \\ \sin(\omega \cdot t - 2\pi/3) \\ \sin(\omega \cdot t + 2\pi/3) \end{bmatrix} \quad \text{and} \quad \begin{bmatrix} v_{a2} \\ v_{b2} \\ v_{c2} \end{bmatrix} = V_2 \cdot \begin{bmatrix} \sin(\omega \cdot t) \\ \sin(\omega \cdot t - 2\pi/3) \\ \sin(\omega \cdot t + 2\pi/3) \end{bmatrix}.$$

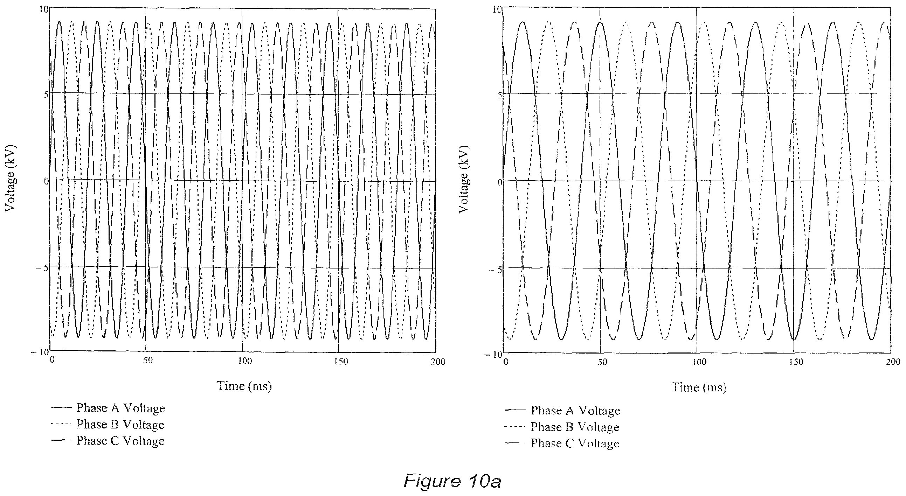

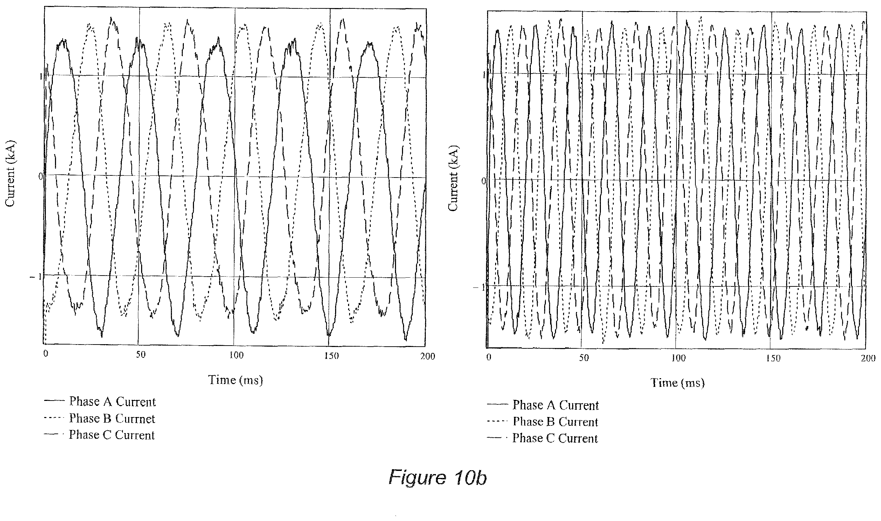

The AC voltages and currents of a MATLAB model based on the circuit topology shown in Figure 9 and representing two three-phase 11kV AC systems being operated at 20MW using chains of 16 bipolar modules in which one system is operating at 50Hz and the other is at 25Hz are shown in Figures 10a and 10b with the 50Hz system being shown on the left and the 25Hz system being shown on the right.

The operation is open loop so that there is no distortion in the AC currents, including DC offset. However adding in feedback control and optimizing the system operation would reduce or eliminate this.

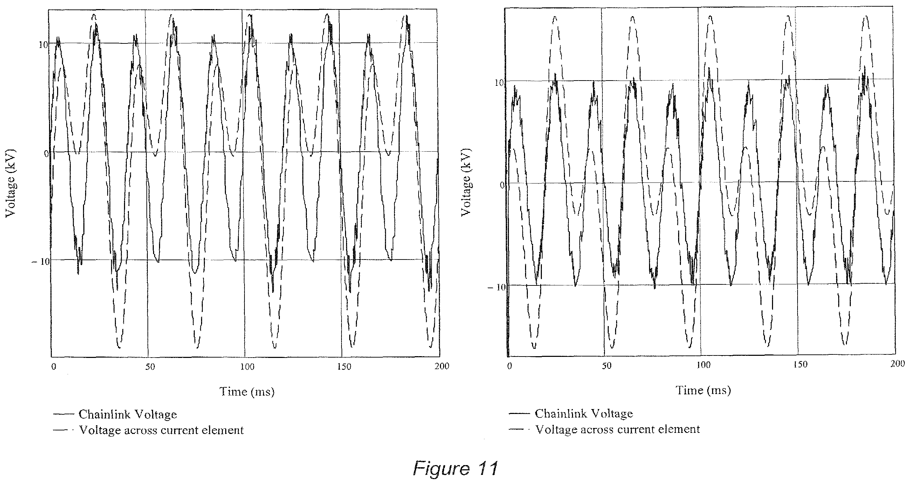

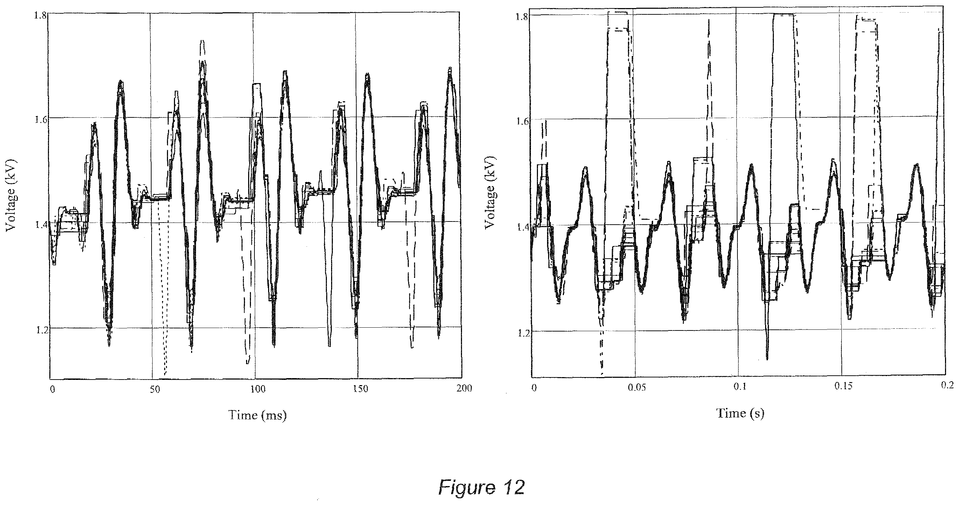

Figures 11 and 12 show the operation of two of the current source elements 10, Figure 11 showing top chain voltage and element voltage for the two elements and Figure 12 showing the capacitor voltages for the two elements. These figures show, in particular, that there is no drift in capacitor voltages, and thereby highlight that the AC power transfer is balanced.

In other embodiments six current source elements 10 are connected in a 3x2 matrix array 30 in order to interconnect a three-phase AC network and a DC network such as might be required in high voltage DC transmission.

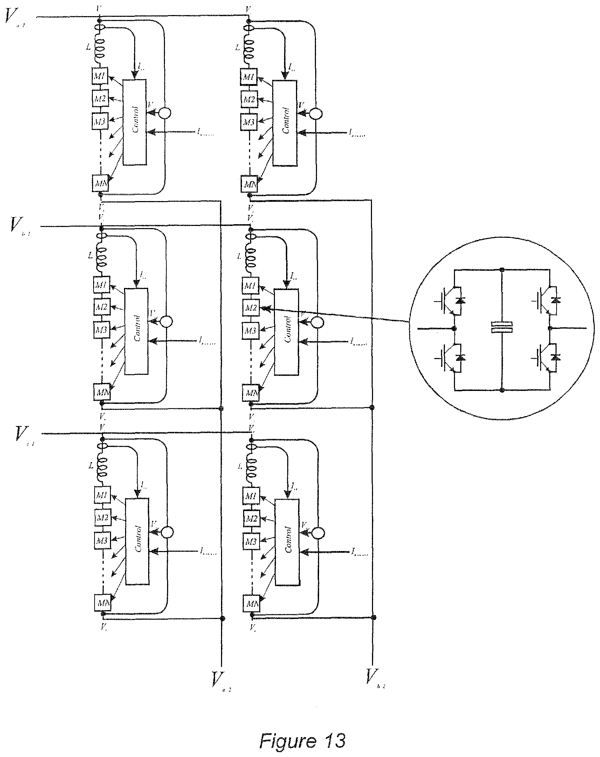

The circuit topology for one such embodiment is shown in Figure 13 in which the DC voltage is lower than the peak AC voltage. In this embodiment each of the current source elements 10 includes 4-quadrant bipolar modules $M_1,M_2,M_3....M_N$ to ensure capacitor balancing.

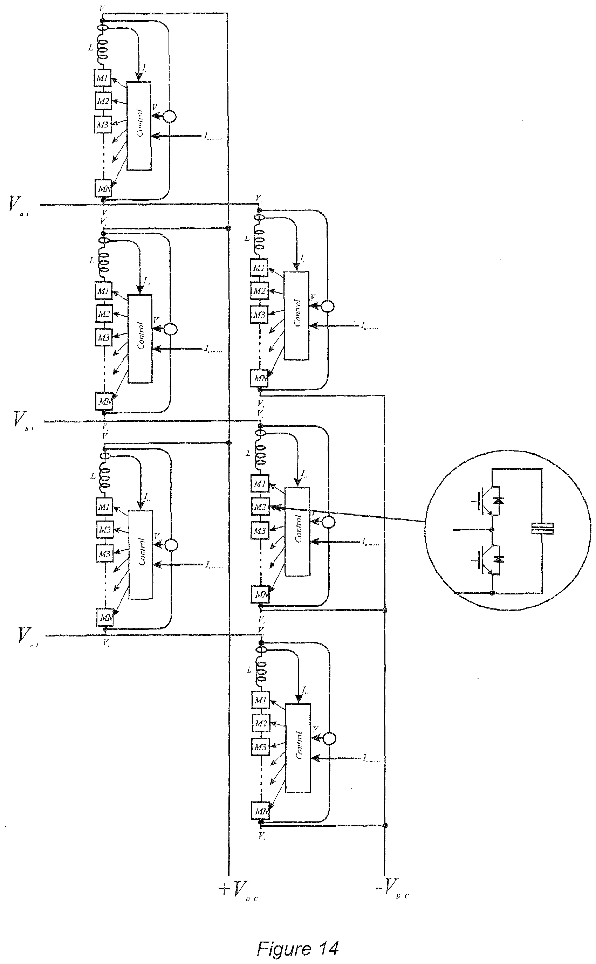

The circuit topology for an example not falling into the scope of the claims is shown in Figure 14 in which the DC voltage is higher than the peak AC voltage. In this embodiment each of the current source elements 10 includes 2-quadrant unipolar modules $M_1,M_2,M_3....M_N$ because the capacitor balancing comes from a current reversal rather than a voltage reversal.

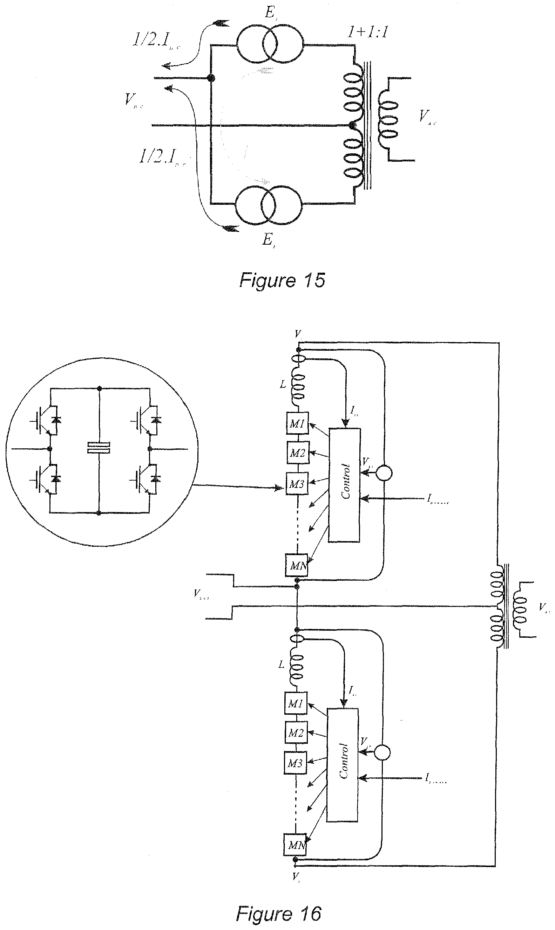

A schematic arrangement of a converter according to an example not falling into the scope of the claims is shown in Figure 15 in which a "biphase converter" (active equivalent to the bi-phase rectifier) is formed by connecting a pair of current source elements 10a,10b to the antiphase terminals of a centre tapped transformer 32, the free ends of the current source elements being commoned to form the DC voltage terminal and the centre tap forming the common 0V connection.

A converter constructed in accordance with the arrangement shown in Figure 15, a detailed circuit topology of which is shown in Figure 16, is suitable for connecting a DC network to a symmetrical single phase AC network.

Each of the current source elements 10 includes 4-quadrant bipolar modules $M_1,M_2,M_3....M_N$ and, unlike the topology shown in Figure 14, the DC voltage can be less than the peak AC voltage in the topology shown in Figure 16.

To illustrate the operation of the circuit topology shown in Figure 16, the applicant has simulated an application in which a 25kV, 4MW, 50Hz AC supply, such as that used for traction, to a DC level that might be used to directly control the traction motors.

In this example, the DC divides and passes equally and in opposition through the transformer windings.

In order to minimize this causing DC flux to appear in the transformer core it requires that the windings are bifilar wound so that the DC flux in the two windings cancel.

The voltage and current are thus:

$$V_{AC} = \sqrt{2} \cdot 25kV = 35.4kV$$

$$I_{AC} = \sqrt{2} \cdot \frac{2MW}{25kV} = 113A$$

and for balance:

$$N \cdot V_M \cdot I_1 = \frac{1}{2} \cdot V_C \cdot I_2 \cdot \cos(\phi)$$

where the right hand side of the equation represents the AC power, $V_M$ is the voltage of the individual modules and N represents the number of modules being switched per quarter cycle.

The factor N may vary according to the conditions and, in the simulation a nominal value of 8 was used for a 16-module string.

In the simulation if the modules have a voltage of 4.5kV, the DC current will be 400A at 10kV DC. The AC impedance is 156.6$\Omega$ and so a line reactor of 20% of this value is 100mH.

The capacitance of the modules is chosen to give a maximum peak to peak ripple under maximum current and in the simulation a value of 3mF was used.

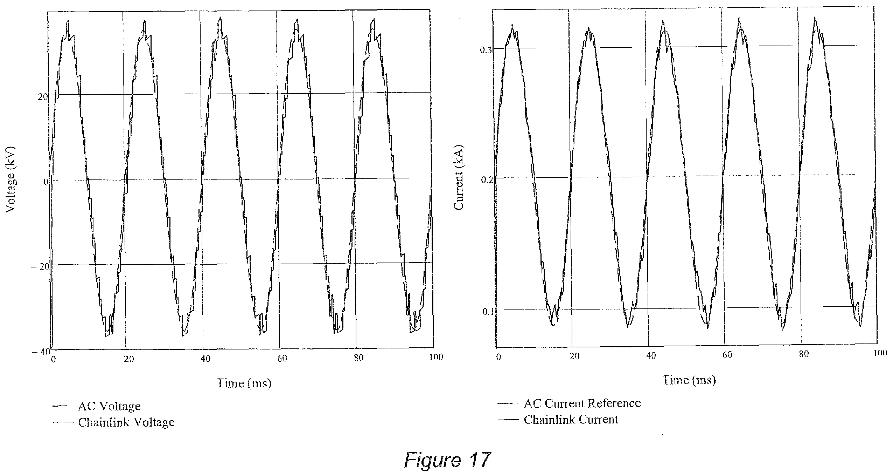

The top constant current element voltages and currents resulting from the simulation, in which the control is operating with a sample frequency of 2kHz, are shown in Figure 17.

From the results shown in Figure 17 it can be seen that the converter current $I_C$ is able to track the reference current $I_{REF}$ with reasonable accuracy.

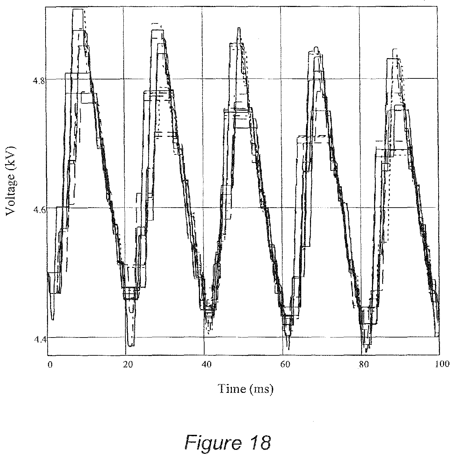

The capacitor voltages are shown in Figure 18 and are stable, thereby demonstrating that power balance is maintained. In particular Figure 18 shows that the peak AC current is less than the DC current so that the current never reverses.

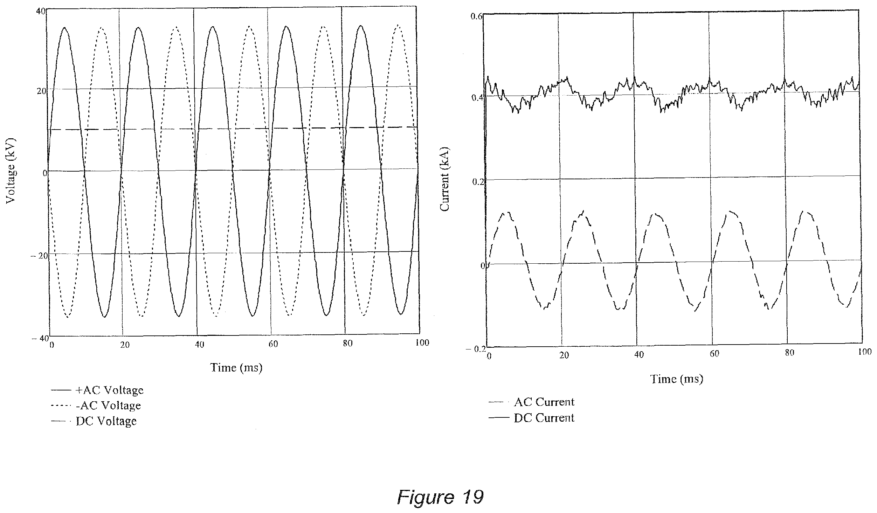

Extending this model to include a duplicated form of the above with the AC voltage and the AC current reference both reversed in polarity allows the full operation of the converter to be demonstrated. Figure 19 shows the resulting AC and DC currents separated to give the terminal conditions.

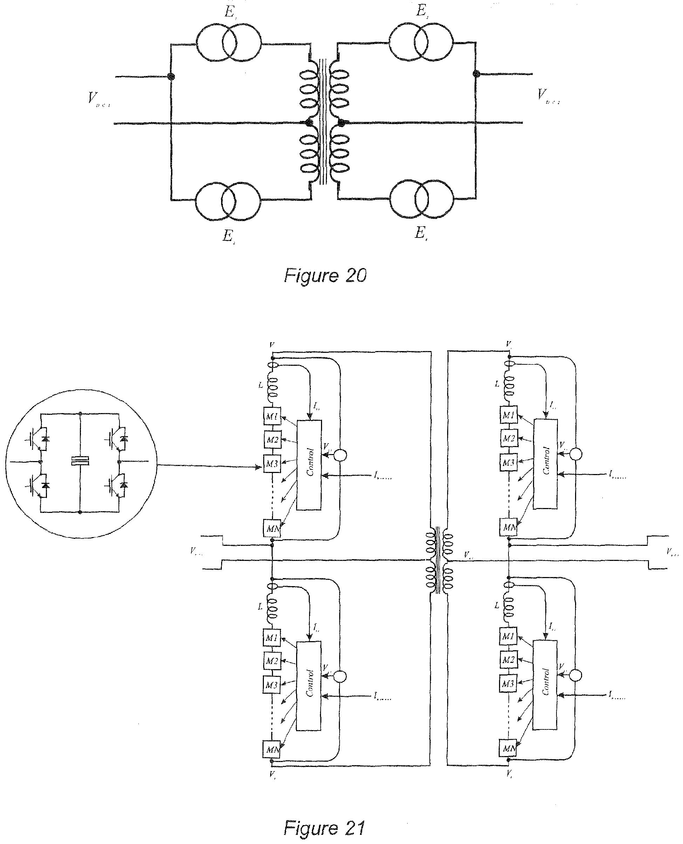

In a yet further example not falling into the scope of the claims, two of the converters shown in Figure 16 are connected back to back in order to interconnect two DC networks and a schematic arrangement is shown in Figure 20.

It is envisaged that a converter in the form shown in Figure 20, a detailed circuit topology for which is shown in Figure 21, is suitable for use in HVDC transmission, particularly where disparate existing HVDC schemes need to be connected.

In this example not falling into the scope of the claims each of the current source elements 10 includes 4-quadrant bipolar modules $M_1, M_2, M_3 .... M_N$, which allows the polarity of either of the DC networks to be reversed. It is envisaged therefore that the circuit topology shown in Figure 21 can be applied to conventional HVDC systems employing thyristors to reverse the polarity of the voltage.

## Claims

1. A converter to interconnect two AC networks, said two AC networks being respectively called "input circuit" and "output circuit",

   - said converter including nine current source elements connected in a 3x3 matrix array and configured to directly interconnect two three-phase AC networks, or
   - said converter including six current source elements connected in a 3x2 matrix array and configured to directly interconnect a three-phase AC network and a single phase AC network, each of said current source elements (10) configured to be connected between the input circuit and the output circuit to facilitate a net power transfer between the input and output circuits effected by means of a difference current through each current source element, each current source element (1) comprising first and second voltage terminals ($V_1$, $V_2$) and a chain of modules ($M_1$-$M_N$) and an inductor (L) connected in series between the first and second voltage terminals, wherein each module includes at least one pair of semiconductor switches (12, 14, 16, 18) connected in parallel with a capacitor (20), each module being a 4-quadrant bipolar module, each current source element further including:

      a control circuit (22) connected across the first and second voltage terminals and configured to measure the potential difference ($V_{12}$) across the first and second voltage terminals and the current through the inductor ($I_{12}$), and
      a control element (24) operably associated with the semiconductor switches to control operation of the semiconductor switches in response to the measured voltage and current values ($V_{12}$, $I_{12}$) in order to regulate current through the inductor in accordance with a received control signal ($I_{DEMAND}$), whereby the semiconductor switches of each module are configured to be controlled to switch modules into and out of the chain of modules so as to maintain the sum of the voltages over the chain of modules and the inductor equal to the potential difference across the first and second voltage terminals of the current source element whilst varying the voltages over the individual modules so as to vary the voltage over the inductor and thereby control the rate of change of current in the inductor, and whereby the semiconductor switches of each module are configured to be controlled to ensure that the charge of the capacitor (20) of the module is maintained within predetermined limits,
      the converter further including a controller that is configured to calculate the difference current to be produced by the or each current source element and configured to send the control signal ($I_{DEMAND}$) to the control element (24) of the or each current source element so that the control element can control the semiconductor switches for the or each current source element to produce the calculated difference current.

2. The converter according to claim 1 wherein each semiconductor switch comprises an insulated-gate bipolar transistor.

3. The converter according to claim 1 or claim 2 wherein the semiconductor switches of each module are connected with the respective capacitor in a full-bridge arrangement to define a 4-quadrant bipolar module that can develop positive or negative voltage and can conduct current in both directions.

4. The converter according to any of claims 1 to 3 wherein the or each current source element is configured to be connected between the input circuit and the output circuit so that input and output currents can circulate only within the input and output circuits respectively, and the or each current source element defines a circulating path for current within the converter that permits an exchange of power between the input and output circuits.

**Patentansprüche**

1. Wandler, um zwei Wechselstromnetze zusammenzuschalten, wobei die zwei Wechselstromnetze als "Eingangsschaltung" bzw. "Ausgangsschaltung" bezeichnet werden,

   - wobei der Wandler neun Stromquellenelemente beinhaltet, welche in einer 3x3-Matrixanordnung verbunden und konfiguriert sind, um zwei dreiphasige Wechselstromnetze direkt zusammenzuschalten, oder
   - wobei der Wandler sechs Stromquellenelemente beinhaltet, welche in einer 3x2-Matrixanordnung verbunden und konfiguriert sind, um ein dreiphasiges Wechselstromnetz und ein einphasiges Wandler direkt zusammenzuschalten,
   wobei jedes der Stromquellenelemente (10) konfiguriert ist, um zwischen der Eingangsschaltung und der Ausgangsschaltung verbunden zu werden, um eine Nettoleistungsübertragung zwischen der Eingangs- und Ausgangsschaltung zu ermöglichen, welche mithilfe eines Differenzstroms durch jedes Stromquellenelement herbeigeführt wird, wobei jedes Stromquellenelement (1) erste und zweite Spannungsklemmen ($V_1$, $V_2$) und eine Kette von Modulen ($M_1$-$M_N$) und eine Induktivität (L), welche in Serie zwischen die erste und zweite Spannungsklemme geschaltet ist, umfasst, wobei jedes Modul zumindest ein Paar von Halbleiterschaltern (12, 14, 16, 18) beinhaltet, welche parallel zu einem Kondensator (20) geschaltet sind, wobei jedes Modul ein bipolares 4-Quadrantenmodul ist, wobei jedes Stromquellenelement weiter beinhaltet:

   eine Steuerschaltung (22), welche über die erste und zweite Spannungsklemme verbunden und konfiguriert ist, um die Potenzialdifferenz ($V_{12}$) über die erste und zweite Spannungsklemme und den Strom durch die Induktivität ($I_{12}$) zu messen; und
   eine Steuerelement (24), welches mit den Halbleiterschaltern funktional verknüpft ist, um Betrieb der Halbleiterschalter als Reaktion auf die gemessenen Spannungs- und Stromwerte ($V_{12}$, $I_{12}$) zu steuern, um Strom durch die Induktivität in Übereinstimmung mit einem empfangenen Steuersignal ($I_{DEMAND}$) zu regeln, wobei die Halbleiterschalter jedes Moduls konfiguriert sind, um gesteuert zu werden, Module in die und aus der Kette von Modulen zu schalten, um die Summe der Spannungen über die Kette von Modulen und die Induktivität gleich mit der Potenzialdifferenz über die erste und zweite Spannungsklemme des Stromquellenelements zu halten und gleichzeitig die Spannungen über die einzelnen Module zu variieren, um die Spannung an der Induktivität zu variieren und damit die Änderungsrate von Strom in der Induktivität zu steuern, und wobei die Halbleiterschalter jedes Moduls konfiguriert sind, um gesteuert zu werden, um zu gewährleisten, dass die Ladung des Kondensators (20) des Moduls innerhalb vorbestimmten Grenzen gehalten wird,
   wobei der Wandler weiter eine Steuerung beinhaltet, welche konfiguriert ist, um den durch das oder jedes Stromquellenelement zu produzierenden Differenzstrom zu berechnen und konfiguriert ist, um das Steuersignal ($I_{DEMAND}$) an das Steuerelement (24) des oder jedes Stromquellenelements zu senden, sodass das Steuerelement die Halbleiterschalter für das oder jedes Stromquellenelement steuern kann, um den berechneten Differenzstrom zu produzieren.

2. Wandler nach Anspruch 1, wobei jeder Halbleiterschalter einen Bipolartransistor mit isolierter Gate-Elektrode umfasst.

3. Wandler nach Anspruch 1 oder Anspruch 2, wobei die Halbleiterschalter jedes Moduls mit dem entsprechenden Kondensator in einer Vollbrückenanordnung verbunden sind, um ein bipolares 4-Quadrantenmodul zu definieren, welches positive oder negative Spannung entwickeln kann und Strom in beide Richtungen leiten kann.

4. Wandler nach einem der Ansprüche 1 bis 3, wobei das oder jedes Stromquellenelement konfiguriert ist, um zwischen der Eingangsschaltung und der Ausgangsschaltung verbunden zu sein, sodass Eingangs- und Ausgangsströme nur innerhalb der Eingangs- bzw. Ausgangsschaltung fließen können, und das oder jedes Stromquellenelement einen Umlaufpfad für Strom innerhalb des Wandlers definiert, welches einen Leistungsaustausch zwischen der Eingangs- und Ausgangsschaltung erlaubt.

# EP 2 368 316 B1

**Revendications**

1. Convertisseur pour interconnecter deux réseaux à courant alternatif (CA), lesdits deux réseaux à CA étant respectivement appelés « circuit d'entrée » et « circuit de sortie »,

   - ledit convertisseur incluant neuf éléments de source de courant connectés en un réseau à matrice 3x3 et configurés pour interconnecter directement deux réseaux à CA triphasés, ou
   - ledit convertisseur incluant six éléments de source de courant connectés en un réseau à matrice 3x2 et configurés pour interconnecter directement un réseau à CA triphasé et un réseau à CA monophasé,

   chacun desdits éléments de source de courant (10) étant configuré pour être connecté entre le circuit d'entrée et le circuit de sortie pour faciliter un transfert de puissance net entre les circuits d'entrée et de sortie effectué au moyen d'un courant différentiel à travers chaque élément de source de courant, chaque élément de source de courant (1) comprenant des première et seconde bornes de tension ($V_1$, $V_2$) et une chaîne de modules ($M_1$-$M_N$) et une inductance (L) connectée en série entre les première et seconde bornes de tension, dans lequel chaque module inclut au moins une paire de commutateurs à semi-conducteur (12, 14, 16, 18) connectés en parallèle à un condensateur (20), chaque module étant un module bipolaire à 4 quadrants, chaque élément de source de courant incluant en outre :

   un circuit de commande (22) connecté à travers les première et seconde bornes de tension et configuré pour mesurer la différence de potentiel ($V_{12}$) à travers les première et seconde bornes de tension et le courant à travers l'inductance ($I_{12}$), et
   un élément de commande (24) associé de manière fonctionnelle aux commutateurs à semi-conducteur pour commander le fonctionnement des commutateurs à semi-conducteur en réponse à la tension mesurée et aux valeurs de courant ($V_{12}$, $I_{12}$) afin de réguler le courant à travers l'inductance en fonction d'un signal de commande reçu ($I_{DEMAND}$), moyennant quoi les commutateurs à semi-conducteur de chaque module sont configurés pour être commandés pour commuter des modules à l'intérieur et en dehors de la chaîne de modules de sorte à maintenir la somme des tensions sur la chaîne de modules et l'inductance égale à la différence de potentiel à travers les première et seconde bornes de tension de l'élément de source de courant tout en faisant varier les tensions sur les modules individuels de sorte à faire varier la tension sur l'inductance et à commander ainsi le taux de changement de courant dans l'inductance, et moyennant quoi les commutateurs à semi-conducteur de chaque module sont configurés pour être commandés pour assurer que la charge du condensateur (20) du module est maintenue à l'intérieur de limites prédéterminées, le convertisseur incluant en outre un dispositif de commande qui est configuré pour calculer le courant différentiel devant être produit par l'élément ou chaque élément de source de courant et configuré pour envoyer le signal de commande ($I_{DEMAND}$) à l'élément de commande (24) de l'élément ou de chaque élément de source de courant de sorte que l'élément de commande peut commander les commutateurs à semi-conducteur pour l'élément ou chaque élément de source de courant pour qu'ils produisent le courant différentiel calculé.

2. Convertisseur selon la revendication 1, dans lequel chaque commutateur à semi-conducteur comprend un transistor bipolaire à grille isolée.

3. Convertisseur selon la revendication 1 ou la revendication 2, dans lequel les commutateurs à semi-conducteur de chaque module sont connectés au condensateur respectif dans un agencement en pont complet pour définir un module bipolaire à 4 quadrants qui peut développer une tension positive ou négative et peut conduire du courant dans les deux sens.

4. Convertisseur selon l'une quelconque des revendications 1 à 3, dans lequel l'élément ou chaque élément de source de courant est configuré pour être connecté entre le circuit d'entrée et le circuit de sortie de sorte que des courants d'entrée et de sortie peuvent circuler uniquement à l'intérieur des circuits d'entrée et de sortie respectivement, et l'élément ou chaque élément de source de courant définit un trajet de circulation pour le courant à l'intérieur du convertisseur qui permet un échange de puissance entre les circuits d'entrée et de sortie.

Figure 1

Figure 3

Figure 5

Figure 2

Figure 4

Figure 6

Figure 7

12

*Figure 8*

Figure 9

Figure 10a

Figure 10b

*Figure 11*

*Figure 12*

Figure 13

Figure 14

20

Figure 15

Figure 16

Figure 17

22

Figure 18

*Figure 19*

Figure 20

Figure 21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2294821 A
- US 3909685 A
- US 3866643 A
- US 3971976 A
- DE 10103031 A1

- WO 2007028349 A1
- WO 20070328350 A1
- WO 2008067784 A1
- US 2004022081 A1
- DE 10217889 A1